Europäisches Patentamt

European Patent Office

Office européen des brevets

(19)

(11) **EP 1 316 916 A1**

(12) **EUROPEAN PATENT APPLICATION**

(43) Date of publication:
**04.06.2003 Bulletin 2003/23**

(51) Int Cl.7: **G06N 5/00**

(21) Application number: **01310038.3**

(22) Date of filing: **30.11.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **BRITISH TELECOMMUNICATIONS public limited company**<br>**London EC1A 7AJ (GB)** | (72) Inventor: **The designation of the inventor has not yet been filed**<br><br>(74) Representative: **Lloyd, Barry George William et al**<br>**BT Group Legal Services,**<br>**Intellectual Property Department,**<br>**8th Floor, Holborn Centre,**<br>**120 Holborn**<br>**London EC1N 2TE (GB)** |

(54) **Constraint analysis apparatus and method**

(57)    The invention is concerned with improving methods of identifying domains of variables that satisfy one or more predetermined constraints.

In an embodiment, constraints are expressed as a combination of existing constraints, which have constraint properties and specific optimised propagation mechanisms associated with them. The invention utilises constraint property information because propagation methods are coupled with properties, so that selection of an efficient propagation method is dependent on constraint properties.

In the invention the nature of the combination of constraints is assessed, and equivalent property operations are identified. A problem with combining properties is that you have to *close* a set of properties by intersection (i.e. compute all possible combinations). Thus in the invention, the *properties* are cast into a format that allows them to be combined in a scalable manner, from which properties of the new constraint can be inferred.

This format is based on a specific representation of constraint properties, referred to in the description as types, and on combining types in accordance with specific type operations.

**Fig 4b**

**Description**

The present invention relates to a constraint analysis apparatus and method, and is suitable particularly, but not exclusively, for use in resource allocation problems.

BACKGROUND

Constraint programming is a programming technology for solving complex combinatorial problems, where data representing a problem are described by variables, and conditions between the variables are represented by constraints. Each variable has an associated domain, which is a set of its potentially feasible values.

Constraint programming is essentially a means of reducing domains of variables to values that satisfy whichever constraints are specified for a problem. The main applications areas of constraint programming include planning, scheduling, timetabling, routing, transmitter placement, frequency allocation, and network configuration, among others.

Constraints describe different relationships that must be met within a set of variables in order to solve a problem. A process known as "domain reduction" allows computation of one, several, the best, or all of the values that may be solutions to the problem, and involves searching through the domains, dynamically and efficiently reducing the domains, thereby effectively shrinking the size of the problem. For more information the reader is referred to *"Program !*
*= Program: Constraint Programming and its Relationship to Mathematical Programming",* available from the Institute for Operations Research and the Management Science (INFORMS) 901 Elkridge Landing Road, Suite 400, Linthicum, Maryland 21090 USA.

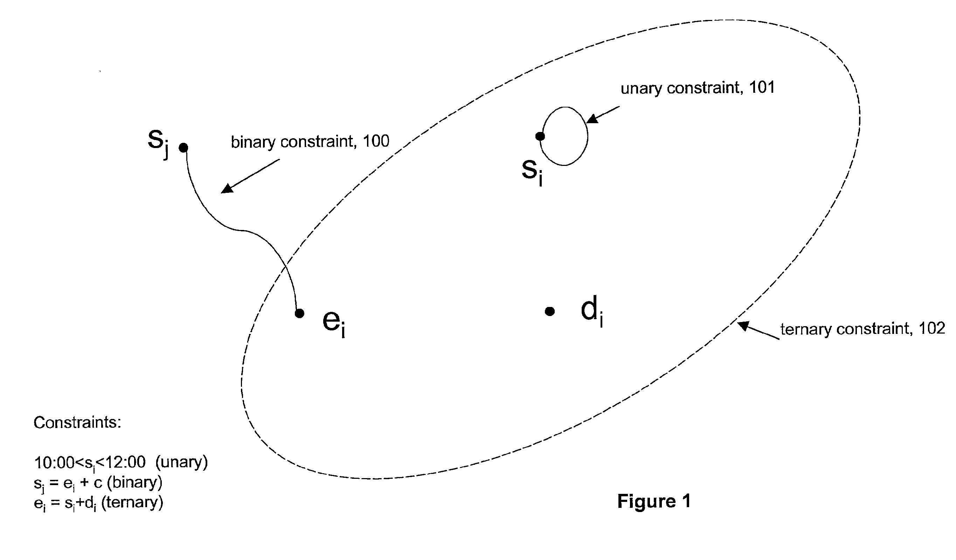

An example of a typical constraint based resource allocation problem is a vehicle routing problem, where the goal is to assign a sequence of jobs, or visits, to each vehicle in a fleet. A representation of variables and constraints comprising such a vehicle routing problem is shown in Figure 1, where variables $s_i$, $d_i$, $e_i$, respectively represent the start time, duration and end time of a job $t_i$. In the description, the terms "variable" and "domain variable" are used interchangeably. The constraints 100, 101, 102 in Figure 1 represent the following conditions: firstly the scheduling of jobs may have time constraints - e.g. a shop to which a delivery has to be made by one of the vehicles is open between 10 am and 12 pm; this can be represented by a unary constraint (100) 10:00 < si < 12:00. Secondly the end time for each job is given by the start time plus duration of the job; this can be represented by a ternary constraint (102) $s_i+d_i$
$= e_i$. Thirdly there are sequencing constraints, such as travel times (denoted as a constant, c), placed on job scheduling; this can be represented by a binary constraint (101) $e_i+c = s_j$, where $s_j$ is the start time of the next job (identified by j).

A value, or a set of values, which satisfy the specified constraints, can be identified by carrying out the domain reduction process mentioned above. This method is generally referred to as a "propagation", or "filtering", method. Essentially, a propagation method systematically removes values, from the domains of the problem variables, which violate any of the problem constraints. For further information relating to these particular methods, the reader is referred to Mackworth, A.K. Consistency in Networks of Relations. *Artificial Intelligence,* Vol. 8(1), pp. 99-118, 1977.

In order to focus on the specific contribution of the present invention, it is useful to first examine the methodology employed in the most general of these methods - a so-called "AC3" method. The strength of the AC3 method is that it can be applied to any sort of constraint; however, such comprehensive applicability incurs an efficiency cost: for a particular constraint, such a method typically involves many unnecessary computations. The methodology of the AC3 method is most easily illustrated by means of a simple example.

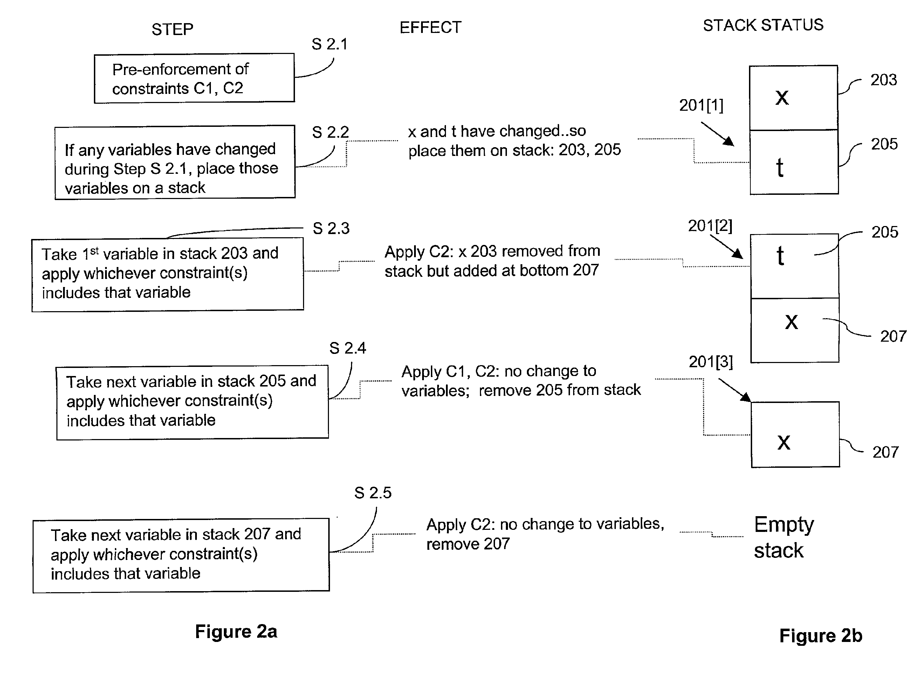

Consider a problem that has two variables and two constraints, where the variables are x and t and the constraints are t>0 (C1) and x=t (C2). Each of the variables has a domain - i.e. a set of values; in this example, the domain of x is [0, 1, 2], the domain of t is [0, 1]. Referring to Figures 2a and 2b, the AC3 propagation method broadly comprises the following steps

Step S 2.1 Pre-enforcement: look at each of the constraints, and remove all values from the domains that are incompatible with the constraints. List each variable that has had a change made to its domain.

*Output of Step S 2.1 is removal of 2 from the domain of x, and removal of 0 from the domain of t- i.e. x is [0, 1] and t is [1]*

Step S 2.2 Place the, or each, changed variable in a stack 201 (a stack is alternatively referred to as a "queue" in the following description)

*Output of Step S 2.2 is a stack 201[1] comprising x and t (see Figure 2b)*

Step S 2.3 Take the first variable 203 in the stack 201, and apply whichever constraint(s) include that first variable 203. The first variable 203 is x, and is included constraint in C2, so constraint C2 is applied to variables x and t. If, having applied the constraint to the variables, any of the variables have changed, place the changed variable on the bottom of the stack 201. Remove the first variable 203 from the stack.

*Output of Step S 2.3: variable x having domain [1]; as x has changed, x is placed on the bottom of the stack 207, and the first variable 203 is removed from the stack*

Step S 2.4 Take the next variable 205 in the stack 201, and apply whichever constraint(s) include that variable 205. The next variable 205 is t, and is included in constraints C1 and C2, so constraints C1, C2 are applied to variables x and t. If, having applied the constraint to the variables, any of the variables have changed, place the changed variable on the bottom of the stack 201. Remove the next variable 203 from the stack.

*Output of Step S 2.4 - no change; the next variable 205 is removed from the stack*

Step S 2.5 Take the next variable 207 in the stack, and apply whichever constraint(s) include that variable 205. Variable x is the next variable 207, and is included constraint in C2, so constraint C2 is applied to variables x and t. If, having applied the constraint to the variables, any of the variables have changed, place the changed variable on the bottom of the stack 201. Remove the next variable 207 from the stack.

*Output of Step S 2.5 - no change; the next variable 207 is removed from the stack*

As the stack is empty, the domains of variables x and t have been successfully reduced - namely x = [1], t = [1]. Clearly, if there had been more constraints, and if the variables x, t had had larger domains, the number of steps would increase accordingly.

As can be seen, a problem with this method is that many redundant constraint checks can be carried out - essentially, and as illustrated by the example given in Figure 2a - the same pair of values may unnecessarily be checked many times in the course of reducing the domains of variables.

Other propagation methods have been developed, each of which attempts to improve the efficiency in constraint checking by exploiting value-orientated propagation. The most efficient known propagation method is AC6, which records all values that satisfy a constraint as soon as they are discovered. This can be explained by means of an example: Consider a value u in the domain of x and a value v in the domain of y such that the pair (u,v) satisfies constraint c. In addition, assume there is no u' in x and v' in y such that c(u',v) and c(u,v'). In other words, u is the only compatible value for v and vice-versa. Assume constraint c is x=y. With the AC3 method, the pair (u,v) is systematically (and repeatedly) checked against c as described above with reference to Figure 2a, with the arguments u and v. With the AC6 method, as soon as this "positive hit" is encountered, it is recorded once and for all, and removed from the domain of values of x and y, thus avoiding future checks on these values.

A user typically defines the constraints comprising his problem. With known systems, the user can define the constraints in one of the following ways:

(1) Through an algebraic expression of variables, which is interpreted by built-in operators of the system. For instance, the user writes "x<y" and the system can automatically create a constraint c (<x,y>,"<") [meaning constraint c, involving 2 variables (x and y), wherein the relationship between them is <];

(2) By constructing an object of a built-in generic functional or predicative constraint class having user-specified scope and user-specified function or predicate. For instance, the user can invoke a constructor of the predicative constraint class with the scope <x,y> and a binary predicate "bool test(u,v)" as arguments and the system will create a constraint c (<x,y>,test).

(3) By defining a new kind of constraint - e.g. a new class that implements a specific predicate and some or all the propagation algorithms required (bound-/domain- consistency pre-filtering/filtering) and by constructing objects of this class with a scope.

Method (1) guarantees optimal propagation for the constraints, since, to date, the best propagation algorithms are encoded for each kind of constraint (ie: method of propagating constraints have been tailored to suit the kind of constraint). However, its scope is limited to built-in constraints.

Method (2) is the default constraint creation method and is particularly suited to non-expert users. It has the broadest scope since any constraint may be defined in this way, and it does not require any algorithm programming. However, it offers no performance guarantees since propagation relies on generic algorithms (i.e. constraints are propagated using either the AC3 or AC6 methods described above).

Method (3) requires a clear understanding of propagation algorithms and good programming skills. For this reason, it is generally only used by expert users.

As stated above, domain reduction simplifies computation of one, several, the best, or all of the solutions to the problem. A factor that determines how vigorously a domain is pruned is the *scope* of propagation applied to the domains. The scope of propagation essentially defines the extent to which the constraints must be satisfied within the domain of values making up the variable.

The example described above employs so-called *"domain consistency"* scope (commonly referred to as "arc consistency"), where all of the values in the domains are checked against the constraints. An alternative to domain consistency is *"bound consistency"* scope, where just the bounds (ie. the max and min values) are checked against the constraints. A further alternative is *"value consistency"* scope (commonly referred to as "constraint checking"), where constraints are checked as soon as all of the variables involved therein are assigned a domain comprising a single value.

As can be seen from the above paragraphs, a constraint essentially describes a relationship between variables. As is known in the art, constraints can be characterised by the logic properties of their relations, e.g. reflexivity, convexity, over a computation domain. A *constraint property* over $D^k$ is any subset of k-ary relations over D, where D is the computation domain and k is the arity, or the number of variables in a constraint (e.g. referring back to Figure 1, constraint x =t has arity of 2 (binary constraint)).

Examples of constraint properties include convexity, concavity, functionality, min-closedness, and max-closedness; each of these is essentially a mathematical description of characteristics of a constraint (so that, e.g. an inequality constraint, such as x<y, has certain characteristics that can be classified into a set of properties). In the following description, the term "primitive property" is interchangeably used with "property" per-se.

As an alternative to a mathematical description of a property (which is set out in Appendix 1), properties can be illustrated via a matrix representation. This has the benefit of removing the mathematical complexity and thus allows us to explain the effect, or the significance, of a constraint in terms that are more easily understood by non-mathematical readers.

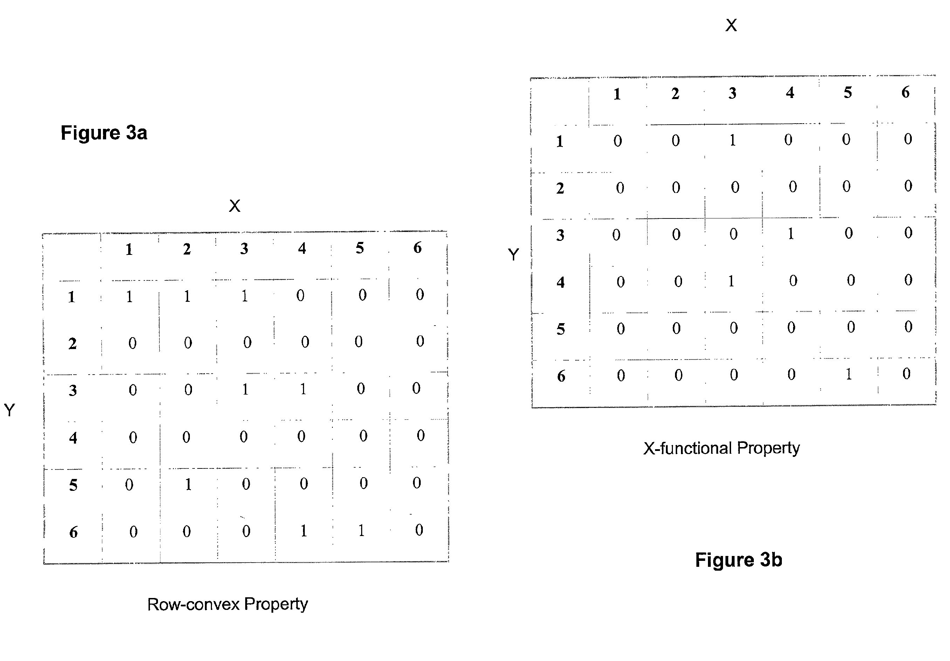

Thus Figures 3a - 3d provide an informal description of the convex, concave, functional, min-closed, and max-closed properties. Each figure shows a matrix representation for the case of binary constraints (recalling, from Figure 1, that a binary constraint has two variables, here X and Y). The top-side and left-hand side of the matrix represent values in a domain (here [1...6] for each variable) and a 1 within the matrix indicates that the constraint is satisfied by the pair of values represented by that location. For example, if there is a 1 in location (1, 3) in the matrix, this indicates that the constraint is satisfied by the values X=1, Y=3, so that the domain includes values X = 1, Y = 3.

Referring firstly to Figure 3a, this shows a matrix representation of a *row-convex property* (or x-convex), which is characterised by the following pattern: if there are any 1's in a row (i.e. if, for a given value of the Y variable, there is more than one value in the domain of the X variable), then they will be grouped together. This can be seen from Figure 3a, where, for each row on which more than a single 1 appears, there are no gaps between the occurrences of the 1s.

Other convex-related properties (not shown) include a *column-convex property* (or y-convex), where in every column, the 1s, if any, are grouped together. From the column and row convex description it is easily deduced that a *convex constraint* is characterised by having, in every row and every column, the 1s, grouped together. Thus the matrix shown in Figure 3a is representative of a constraint that is row-convex, but which is not column-convex and thus not convex per-se.

Figure 3b shows a constraint having *x-functional* property, which is characterised by having at most a single 1 per row. Conversely, a constraint having *y-functional* property (not shown) can be characterised by having at most a single 1 per column, while a constraint having *functional* property per-se (not shown), can be characterised by having at most a single 1 both per column and per row. Thus the matrix shown in Figure 3b is representative of a constraint that is x-functional, but which is not y-functional and thus not functional per-se.

Figure 3c shows a constraint having *max-closed* property, which is essentially an inference property, and infers information from existing values, namely that a constraint c, having solutions (u, v) and (u', v') also has a value at max(u, u') and max(v, v'). For example, referring to cell location (3, 1) and cell location (2, 2), it can be seen that there are 1s in each cell. Taking the maximum of these two co-ordinates, X=3 and Y=2, then there will also be a 1 at (3, 2).

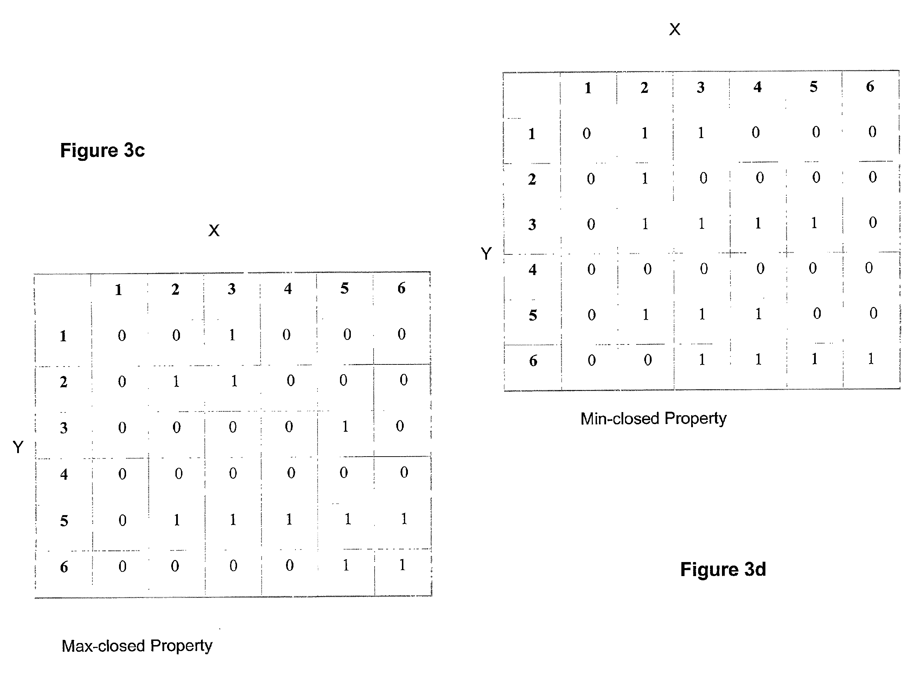

Figure 3d shows a constraint having *min-closed* property, which is also an inference property, and infers information from existing values. In this case, it can be inferred that a constraint c, having values (u, v) and (u', v') also has a value at min(u, u') and min(v, v'). For example, referring to cell location (3, 1) and cell location (2, 2), it can be seen that there are 1s in each cell. Taking the minimum of these two co-ordinates, X = 2 and Y = 1, then there will also be a 1 at (2, 1).

Thus, if a constraint is known to be either, or both, min-closed or/and max-closed, and only some of the values have been determined, then values can be inferred from existing values. Alternatively, a constraint, for which all values have been determined, can be analysed (using the values) to determine whether or not it has the property of being min/max-closed.

There is a group of properties: *row-concave, column-concave,* and *concave* per se (not shown), and each of these is the reverse (or converse) of its convex property counter-part, so that, for example, a constraint having a row-concave property has 0s grouped together on a row.

Other terms that are commonly used when discussing a constraint system, and which are used in the following description, include completeness, strongest property and constraint network. These are defined as follows:

"completeness": a measure of the efficiency of a system, and indicates the ability of the system to identify the strongest property, where the "strongest property" is the set intersection (or logical conjunction) of all properties that a constraint satisfies. Evaluating the "soundness" and "completeness" of a system is a generally accepted way of evaluating any inference system.
"constraint network": all of the constraints in a problem.

For ease of reference for the reader, the definitions of these, and other terms discussed above and below, are provided in Appendix A.

According to the present invention, there is provided a method or system as set out in the accompanying claims. Further aspects of the invention will be apparent from the following description of preferred embodiments of the invention, which are given by way of example only and with reference to the accompanying drawings, in which

Figure 1 is a schematic representation of conventional n-ary constraints;
Figure 2a is a flow diagram showing steps involved in conventional constraint propagation methods;
Figure 2b is a schematic representation of the organisation of variables in conventional constraint propagation methods;
Figure 3a is a schematic representation of the property row-convexity;
Figure 3b is a schematic representation of the property x-functionality;
Figure 3c is a schematic representation of the property max-closedness;
Figure 3d is a schematic representation of the property min-closedness;
Figure 4a is a schematic representation of operating environment of embodiments of the invention;
Figure 4b is a schematic representation of an embodiment of the invention;
Figure 5 is a schematic representation of unary inter-property relationships, as utilised by embodiments of the invention;
Figure 6 is a block diagram showing operation of a first embodiment of the invention; and
Figure 7 is a schematic representation of binary inter-property relationships, as utilised by embodiments of the invention.

## OVERVIEW OF OPERATING ENVIRONMENT OF EMBODIMENTS OF THE INVENTION

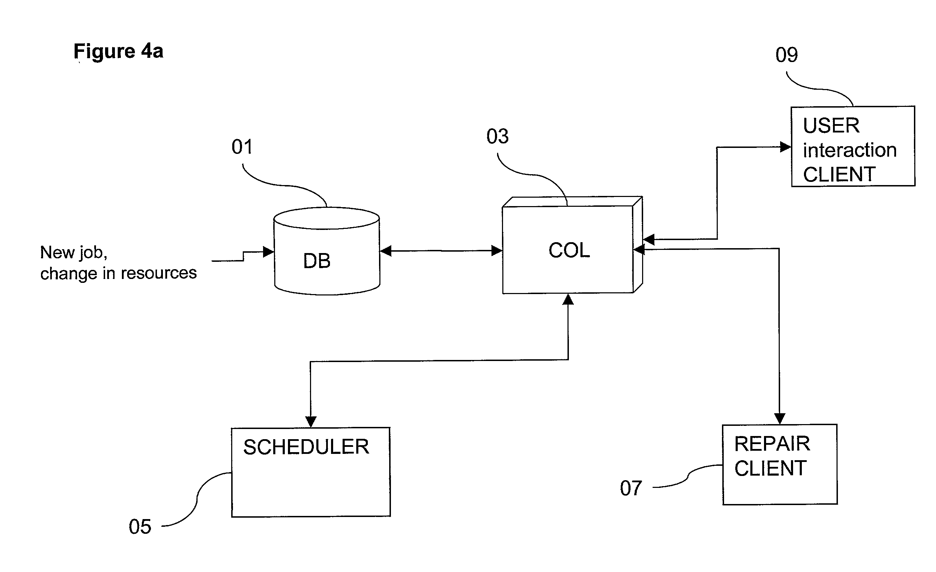

Figure 4a is a schematic block diagram showing an arrangement in which embodiments of the invention may operate. Such an arrangement may be used for a scheduling problem, in particular for scheduling the allocation of jobs to a workforce. The arrangement comprises a database 01, which receives input specifications detailing, e.g., jobs to be processed, changes to resources (e.g. technician T1 is off sick) and conditions to be satisfied (e.g. job 1 has to be completed before job 2 etc.). The database 01 is in operative association with a constraint processing engine 03, hereinafter referred to as COL. Innovative features of the invention include aspects of the COL 03 and are described in more detail below. However, in overview, the COL 03 extracts information from the database 01, constructs constraints based on the extracted information, and applies a variety of methods in an attempt to satisfy the constructed constraints.

The COL 03 is also in operative association with a plurality of clients 05, 07, 09. A first of the clients is a scheduler 05, which receives problem variables, e.g. job and resource information, from the COL 03, together with problem expressions-e.g. problem constraints and optimisation function. The scheduler 05 attempts to optimise the optimisation function by applying changes to the variables and reviewing the performance of the optimisation function, until the performance satisfies a predetermined performance criterion.

If the scheduler 05 makes changes to the variables, these changes have to be checked by the COL 03, to determine whether or not the changes violate, or satisfy, the constructed constraints. The process of attempting to optimise a solution (by the scheduler 05), then checking that the said solution satisfies the constraints (by the COL 03), is typically an iterative process.

A second client is a repair client 07, which also receives problem variables and problem expressions of the kind described above from the COL 03. In overview, when a change is input to the database 01, which is likely to render a currently valid solution invalid, the problem variables and expressions are immediately input to the repair tool, which interacts with the COL 03 in an attempt to identify a valid solution for the modified values. Once a valid solution has been identified, it can be passed to the scheduler 05 for optimisation thereof.

A third client is a user interaction client 09, which allows a user to effect direct changes to the problem variables and/or expressions, by, for example, removing a task. Any changes made in this manner are essentially equivalent to a change input to the database 01 as described above, and typically involves subsequent operation of the repair tool 07 and scheduler 05.

The clients 05, 07, 09 could all be located on the same terminal, could each be located on a different terminal, and connected to the COL 03 via a Local Area Network (LAN) or similar means, or could each be located on a different terminal within separate networks. The database 01 could be located local to, or remote from, the COL 03 and the clients 05, 07, 09.

EMBODIMENTS OF THE INVENTION

Features of the constraint processing engine COL 03 are now described, with reference to Figures 4a, 4b, 5 and 6.

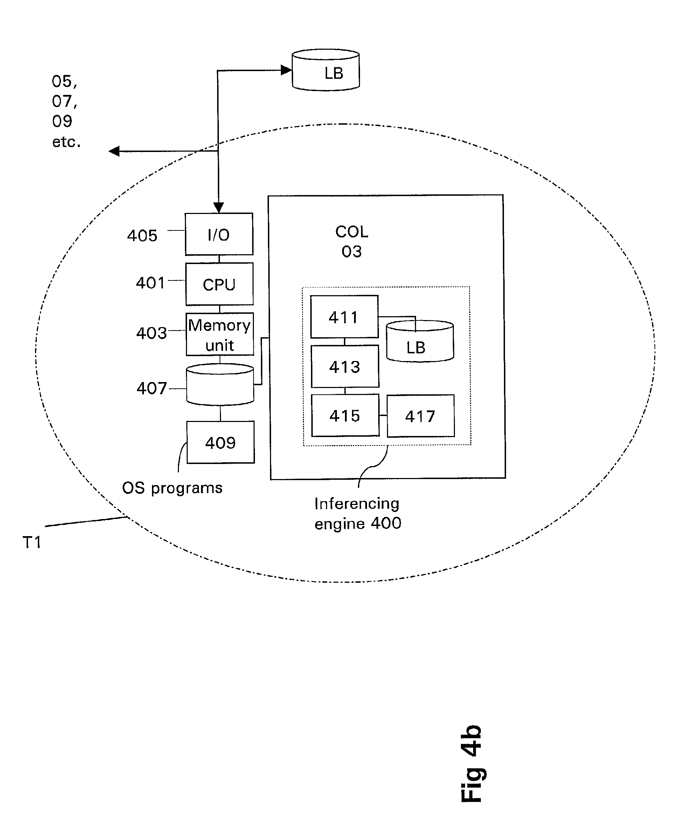

Figure 4b shows a terminal T1 comprising a central processing unit (CPU) 401, a memory unit 403, an input/output device 405 for connecting the terminal T1 to the clients 05, 07, 09 and to the database 01; storage 407, and a suite of operating system programs 409, which control and co-ordinate low level operation of the terminal T1.

Generally embodiments of the invention are referred to as an inferencing engine 400, and comprise at least some of programs 411, 413, 415, 417. These programs, which are described in more detail below, are stored on storage 407 and are processable, under general control of the COL 03, by the CPU 401. The inferencing engine 400 also includes a constraint library LB, which stores constraints and properties relating thereto. It is understood that each of the programs 411, 413, 415, 417 could comprise a suite a of computer programs, and could be written in either, or a mixture, of the well known procedural or object-oriented programming paradigms.

Embodiments of the invention are concerned with improving the domain reduction process described above, so that, in terms of the system presented in Figure 4a, the validity of changes made to variables - e.g. by the scheduler 05, or by the user interactive client 09, can be evaluated as efficiently as possible.

Embodiments make use of the realisation that a constraint can be defined as a combination of other constraints. This then opens up the possibility for re-use of existing constraints, which have already been analysed for their properties, and have specific propagation mechanisms, which have been optimised according to properties, associated therewith. Thus, when a new constraint, for which a specific propagation mechanism does not exist, is received by the inferencing engine 400, the new constraint is expressed in terms of constraints already defined and accessible to the inferencing engine 400.

Consider an example of a new constraint $c_3$, which can be defined as $c_3 = c_1 \cap c_2$ (where $c_1$ and $c_2$ are known). Having realised that a new constraint can be expressed as a combination of other, previously defined and optimised constraints, another realisation is that the property information relating to constraints $c_1$ and $c_2$ can be exploited in order to determine a property for $c_3$.

New properties can be computed by defining operations, such as complementation ($-_P$), intersection ($\cap_P$) and union ($\cup_P$) (many more are possible), on properties. However, a problem with combining properties is that you have to *close* a set of (primitive) properties by intersection (i.e. compute all possible combinations-see example a few lines down) just to make sure that, for any constraint you want to specify, the strongest property for this constraint does indeed exist. Consider a set of four properties A, B, C, D whose closure by set-intersection has 15 different members: A, B, C, D, A+B, A+C, A+D, B+C, B+D, C+D, A+B+C, A+B+D, A+C+D, B+C+D, A+B+C+D. In this example, the strongest property would be A+B+C+D.

The property operation(s) involved in a new constraint, say, $c_3 = c_1 \cap c_2$ is $\cap_p$, and this would have to be defined for each member of the set. For example, the set of properties (where a property is denoted as pi) for $p_3 = p_1 \cap_p p_2$ will involve a 15x15 matrix, where each element of the matrix has been specified for property intersection between members of the set; if $c_3$ involved a mixture of, say union, intersection and complementation of $c_1$ and $c_2$ and other constraints, the property algebra would additionally involve at least a 15x15 matrix for union and a vector of size 15 for complementation of properties.

The major motivation for identifying properties associated with constraints is that propagation methods and consistency scopes are coupled with properties, so that selection of an efficient propagation method and scope of consistency is dependent on constraint properties. For example, if a constraint can be identified as being monotonic, then only the maximum and minimum values of the domains need to be checked (for monotonic constraints, such as x<y, enforcing bound-consistency is equivalent to enforcing domain-consistency, because the result is the same for both domain and bound consistency). As a result the domain can be reduced using bound consistency. In the absence of any knowledge of constraint properties, the constraint would have to be evaluated over the whole domain (i.e. applying arc, (domain) consistency), which incurs unnecessary overheads in terms of processing.

Thus knowledge about constraint properties enables selection of optimum propagation algorithms, which results in faster domain reduction and faster validation of potential solutions.

Embodiments of the present invention are thus focussed on deriving property information relating to new constraints, and are specifically concerned with re*casting* the properties into a format that allows them to be combined in a scalable manner, from which properties of the new constraint $c_3$ can be inferred.

This format is based on a specific representation of constraint properties, referred to herein after as <u>types,</u> and on combining types in accordance with specific type operations.

Type representation

A type comprises a set of one or more primitive properties, and, once defined, can be utilised as a parameter of the constraint network. e.g. for $S_p$ = {fct, n, m}, where $S_p$ indicates a set of properties p, which, in this example includes functional (fct), reflexive (n), max-closed (m);

- a type t1 = {fct, n} corresponds to the properties "functional and reflexive"
- a type t2 = {m} corresponds to the property "max-closed"

A type $t_1$, $t_2$ represents the property that is the set-intersection of its primitive properties, thus removing the need to evaluate the set intersection of properties (close the set of properties by intersection) described above. For all constraints accessible to the inferencing engine 400, the types thereof are defined, and accessible from the library LB.

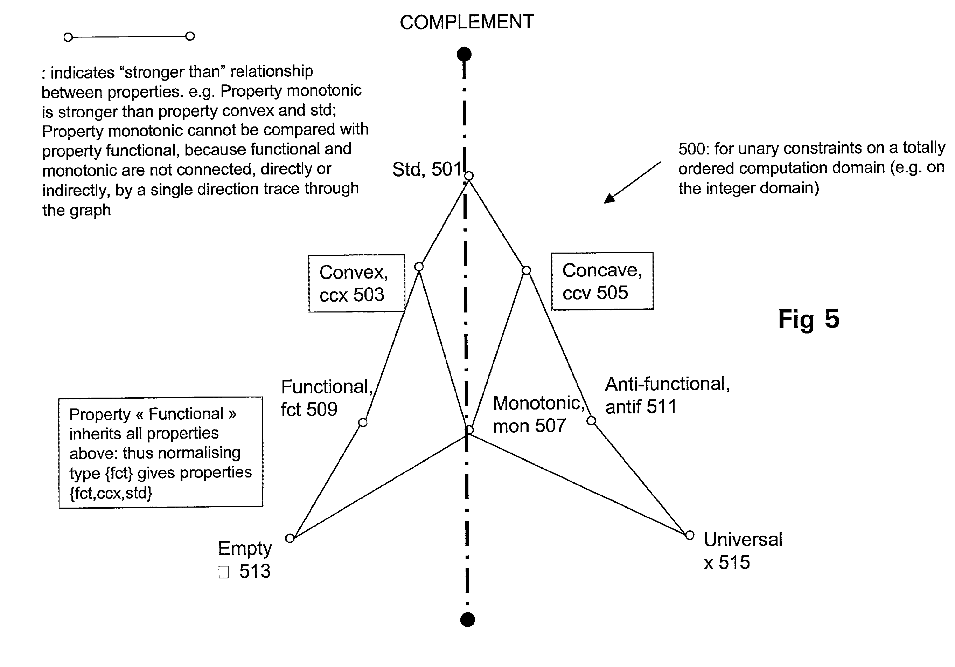

The inferencing engine 400 also needs to know relationships between primitive properties, in particular to determine "stronger-than" relationships between primitive properties. A relationship between types can be expressed using a graph representation such as that presented in Figure 5. Figure 5 shows "stronger-than" relationships for unary constraint primitive properties: as a type is a subset of properties, each node in graph 500 represents a primitive property. The graph 500 shows that property convex 503 is weaker than the universal property 515, and property monotonic 507 is stronger than properties convex 503 and concave 505. Such a representation could be created manually, or automatically, based on previously defined ordering rules.

Thus a "stronger-than" relationship between primitive properties, such as the graph representation shown in Figure 5 (including representations for binary, ternary etc. constraints), is defined, and accessible from the library LB.

Inspection of Figure 5 shows that non-identical types may be equivalent (i.e. non-identical types may have identical intersection of properties)

$$e.g.\ t_1 = fct$$

$$t_2 = fct,\ cv_x,\ std$$

and $t_1 \equiv t_2$ because they both trace down to the functional property, node 509. This feature can be exploited to identify the properties associated with a type, which, in turn, can be used to identify an optimised propagation algorithm, as described in more detail in the context of the second example described below.

Type algebra

Type operations provide an algebraic framework within which types can be combined in accordance with the constraint specification. Thus for the example $c_3 = c_1 \cap c_2$, the corresponding type definition is $t_3 = t_1 \cap_T t_2$, which includes type operation $\cap_T$. In a first embodiment, type operation $\cap_T$ involves so-called "stability expressions" SR(), SI(()), which are combined in a manner that is dependent on the nature of the combination between $c_1$ and $c_2$ (here intersection):

$$t_1 \cap_T t_2 = [SR(t_1) \cup SR(t_2) \cup SI(t_1 \cap t_2)] \hspace{2cm} \text{Equation (1)}$$

In equation 1, SR() and SI() denote "stable by restriction" and "stable by intersection", respectively. These stability expressions can be used to characterise a property. For a union type operator, $\cup_T$, expressions involving different stability expressions, so-called stable by extension and stability by union, are used. The meaning of these stability expressions can be illustrated with reference to the matrix representation in Figure 3a.

Referring to the matrix shown in Figure 3a, for each cell therein, *intersection* of a convex constraint with another convex constraint will result in a 1 if and only if the two constraints individually have a 1 in that cell. It turns out that after intersection of convex constraints, the 1s (if any) in a row are continuous, meaning that the intersection operation on two convex constraints is convex, and the property convex is said to be "stable by intersection".

Conversely, of each cell of the matrix, *union* of a convex constraint with another convex constraint will result in a 1 if either, or both, of the constraints have a 1 in the corresponding cell. It turns out that after union of convex constraints, the 1s (if any) in a row may be discontinuous, meaning that the union operation on two convex constraints is NOT convex in general, and the property convex is not said to be "stable by union".

A property is stable by restriction if the intersection of any constraint satisfying the property with any other constraint is a constraint satisfying that property. A property is stable by extension if the union of any constraint satisfying the property with any other constraint is a constraint satisfying that property.

These stability features, and other definitions of type combinations, are either stored in, or also accessible via, the library LB (formal definitions of SR, SI, SE, SU are defined in Appendix A of the description).

Having evaluated the expression $SR(t_1) \cup SR(t_2) \cup SI(t_1 \cap t_2)$, $t_3$ is evaluated by performing a process referred to herein as "normalisation". Syntactically, the normalisation process is indicated by the presence of square brackets: [..], as can be seen from equation 1.

Normalisation includes reviewing the ordering between the primitive properties in $S_p$ shown in Figure 5, and identifying all properties that include, and are weaker-than, type given by $t_1 \cap_T t_2$. For example, if, upon application of Equation 1, the type given by $t_1 \cap_T t_2$ turned out to be type functional (fct), then with reference to Figure 5, the properties that are included in type functional can be identified: for this example, the properties are functional, convex and standard ($\{fct\} \equiv \{fct, cc_x, std\}$). These are the properties that are involved in new constraint $c_3$, and these can be utilised to identify a propagation algorithm that is optimal for that constraint.

Advantages of the embodiments include re-usability of existing constraint definitions and propagation algorithms, identification of an optimal propagation algorithm for a new constraint, usability (as, in the extreme case, the user merely has to specify the new constraint, and does not have to be an expert to use the system), scalable system that can handle complex constraint definitions comprising unary, binary, ternary etc. constraints. The feature of automatic identification of a bespoke propagation algorithm is entirely new.

The components of the inferencing engine 400, together with the operation thereof when deriving properties of a newly defined constraint, will now be described in more detail, with reference to Figures 4a - 8.

Referring to Figure 4b, the components of the inferencing engine 400 include a program 411 for receiving a new constraint specification, which specification specifies a combination of constraints already stored, and defined, in COL 03. For example, if constraints $c_1$ and $c_2$ have already been entered to the COL 03, a new constraint specification could include, for example $c_3 = c_1 \cap c_2$. Typically a user would input such a constraint specification to the receiving program 411.

The components also include a program 413 for identifying constraint-type information from the library LB relating to the new constraint specification, and a program 415 for combining the identified constraint-type information in order to determine a type for the newly received constraint. In addition program 415 derives properties associated with the determined type. The embodiment can also include a program 417 for creating a propagation method on the basis of the derived property and/or type.

The constraint library LB mentioned above essentially comprises algebraic expressions involving one or more variables, each of which is an algebraic description of a constraint, and built-in operators that are able to interpret these algebraic expressions of the constraint. The library LB additionally stores type and property information, and a link to propagation methods relating to properties and types.

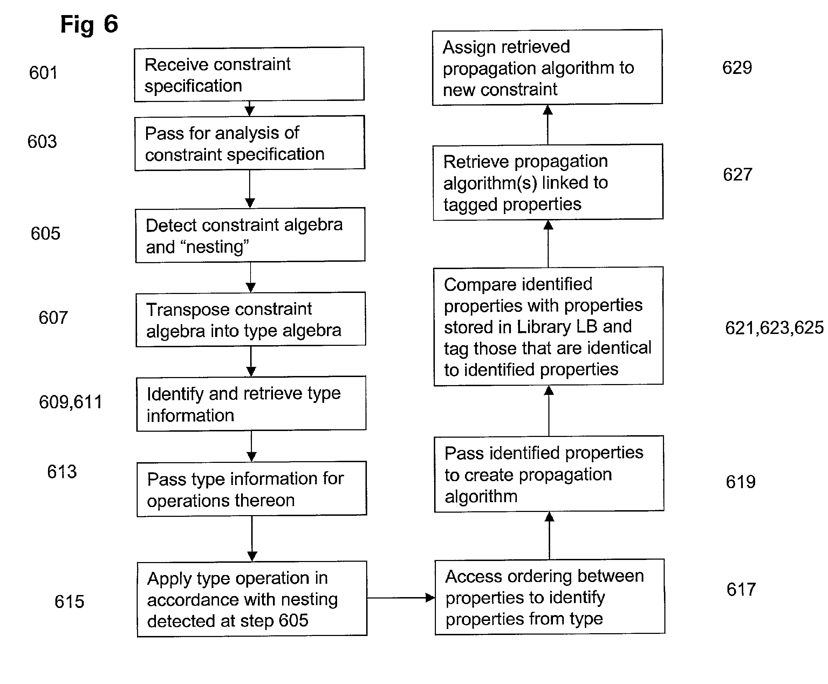

Use of the inferencing engine 400 is now described, by means of several examples. The first example is shown in Figure 6, which is a flow diagram showing the steps involved in identifying a type associated with a new constraint $c_3(x)$ from known constraints $c_1(x)$ and $c_2(x)$:

$$c_3(x) = -c_1(x) \cap c_2(x)$$

where $c_1(x)$ is $x \neq 2$ and $c_2(x)$ is x>0 The receiving program 411 receives 601 the new constraint specification, whereupon it passes 603 the specification to the identifying program 413. The identifying program 413 first detects 605 that there are 2 constraint operations,-(complement) and $\cap$ (intersection), and that these are "nested" within one another. The identifying program 413 transposes 607 the constraint algebra into type algebra: $t_3 = -_T(t_1) \cap_T t_2$ and accesses 609 the library LB in order to extract type operations corresponding to the types, thereby retrieving 611 the following information:

$t_1 = \{concave (cc_v), antifunctional (antif), standard (std)\}$
$t_2 = \{convex (cv_x), concave (cc_v), monotonic (mon) , standard (std)\}$

and the following type operations:

$$-_T = [\cup_{p \in t}\{\{c \in \wp(D^k): -c \in p\}\}]$$

$$t_1 \cap_t t_2 = [SR(t_1)\cup SR(t_2)\cup SI(t_1\cap t_2)]$$

The identifying program 413 then passes 613 this information to the combining program 415, which applies 615 the type operations, in accordance with the nesting detected at step 605:

*first nesting:*

$$-_T(t_1) = [-_T(\{cc_v\})\cup -_T(\{antif\})] = [\{cv_x\}\cup\{fct\}\cup\{std\}]$$

$$-_T(t_1)=\{cv_x,fct,std\}$$

*second nesting:*

$$-_T(t_1)\cap_T t_2 = [SR(-_T(t_1))\cup SR(t_2)\cup SI(-_T(t_1)\cap t_2)]$$

As the types functional and standard are stable by restriction, but types convex, concave and monotonic are not stable by restriction, step 615 involves evaluating the following for the type operation $\cap_T$:

- $SR(-_T(t_1)) = \{fct,std\}$

- $SR(t_2) = \{std\}$

so that $SR(-_T(t_1))\cup SR(t_2) = \{fct,std\}$

- $SI(-_T(t_1)\cap t_2) = SI(\{cv_x\}) = \{cv_x,std\}$

so that

- $-_T(t_1)\cap_T t_2 = [SR(-_T(t_1))\cup SR(t_2)\cup SI(-_T(t_1)\cap t_2)]= [\{fct\}\cup\{cv_x\}] = [\{fct\},\{cv_x\},\{std\}]$

The types are then normalised 617, within the first and second nestings (as indicated by the presence of [..]). As described above, normalising involves accessing the library LB to retrieve "stronger-than" relationships between properties, and has the effect of identifying all properties associated with a type. Such relationships can conveniently be expressed in graphical format, such as is shown in Figure 5. Thus, referring to Figure 5, for the present example, normalising the second, or outer, types {fct} and {$cv_x$} gives properties {fct, $cv_x$, std} and {$cv_x$, std} respectively, so that

$$[\{fct\}, \{cv_x\}, \{std\}] = \{fct,cv_x,std\}$$

The combining program 415 then passes 619 these properties to the creating program 417, which uses 621 these properties to select an optimal propagation algorithm. In a first instance, this "use" involves the creating program 417 accessing 623 the library LB and comparing 625 the properties of the new constraint with properties stored therein (e.g. in an index to propagation algorithms) so as to identify suitable algorithms. Having identified one or more such algorithms from the index, the creating program 417 retrieves 627 the identified propagation algorithm(s) and assigns 629 the retrieved propagation algorithm to the new constraint.

As an alternative to steps 619 - 623, if the index is configured to store information in terms of types, either in addition to, or instead of, properties, the creating program 417 will use the type to select an optimal propagation algorithm.

Note that the property "standard" (std) appears in all types, so it could be removed from the set of primitive properties.

A second example, comprising constraint specification $c_3(x)=c_1(x) \cup -c_2(x)$, is now described, also with reference to Figure 6. In this second example $c_1(x)$ is $x \neq 2$ and $c_2(x)$ is $x>0$.

The receiving program 411 receives 601 the constraint specification, whereupon it passes 603 the specification to the identifying program 413. The identifying program 413 first detects 605 that there are 2 constraint operations, -(complement) and $\cup$ (union), and that these are "nested" within one another. The identifying program 413 transposes 607 the constraint algebra into type algebra:

$$t_3 = t_1 \cup_T -_T(t_2)$$

and accesses 609 the library LB in order to extract type operations corresponding to the types, and retrieves 611 the following information:

$t_1$ = {concave ($cc_v$), antifunctional (antif), standard (std)}
$t_2$ = {convex ($cv_x$), concave ($cc_v$), monotonic (mon), standard (std)}

and the following type operations:

$$-_T = [\cup_{p \in t} \{\{c \in \wp(D^k): -c \in p\}\}]$$

$$t_1 \cup_T -t_2 = [SE(t_1) \cup SE(-_T(t_2)) \cup SU(t_1 \cap -_T(t_2))]$$

The identifying program 413 then passes 613 this information to the combining program 415, which applies 615 the type operations, in accordance with the nesting detected at step 605:

*first nesting:*
$-_T(t_2)$ = {$cc_v, cv_x$,mon,std} (the complement of monotonic is monotonic (refer Figure 5))
*second nesting:*

- $SE(t_1)$ = {std,antif}

As none of the types functional, convex, concave and monotonic are stable by extension:

- $SE(-_T(t_2))$ = {std}

so that $SE(t_1) \cup SE(-_T(t_2))$ = {std,antif}

- $SU(t_1) \cap -_T(t_2) = SU(\{cc_v\})$ = {std,antif}

so that

$$t_1 \cup_T -t_2 = [SE(t_1) \cup SE(-_T(t_2)) \cup SU(t_1 \cap -_T(t_2))] = \{std\} \cup \{antif\} = \{std, antif\}$$

As for the first example, Step 617 includes normalising the types, within the first and second nestings. Referring to Figure 5, for the present example, normalising the second, or outer, nesting [{antif,std} gives {antif,concave,std}.

This example illustrates the powerful inferencing ability of the embodiment: several *equivalent* sets of primitive properties for the new constraint can be identified, which enables selection of more than one optimal propagation algorithms for propagating the constraint.

A third example, comprising constraint specification $c=-(c_1(x) \cup c_2(x)) \cap c_3(x)$, is now described, again with reference to Figure 6. In this third example $c_1(x)$ is $x>0$, $c_2(x)$ is $x \neq 10$ and $c_3(x)$ is $x=5$.

As for the two previous examples, the receiving program 411 receives 601 the constraint specification, whereupon it passes 603 the specification to the identifying program 413. The identifying program 413 first detects 605 that there are 3 constraint operations, - (complement), ∩ (intersection) and ∪ (union), and that these are "nested" within one another. The identifying program 413 transposes 607 the constraint algebra into type algebra:

$$t = -_T(\, t_1 \cup_T t_2) \cap_T t_3$$

and accesses 607 the library LB in order to extract type operations corresponding to the types, and retrieves 609 the following information:

$t_1$ = { convex ($cv_x$), concave ($cc_v$), monotonic (mon)}
$t_2$ = { antifunctional (antif)}
$t_3$ = { functional (fct)}

together with the following type operations:

$$-_T = [\cup_{p \in t}\{\{c \in \wp(D^k) : -c \in p\}\}]$$

$$t_1 \cup_T t_2 = [SE(t_1) \cup SE(t_2) \cup SU(t_1 \cap t_2)]$$

$$t_1 \cap_T t_2 = [SR(t_1) \cup SR(t_2) \cup SI(t_1 \cap t_2)]$$

The identifying program 413 then passes 613 this information to the combining program 415, which applies 615 the type operations, in accordance with the nesting detected at step 605:

*first nesting (t'):*

- $SE(t_1)$ = {std}
- $SE(t_2)$ = {antif}

so that $SE(t_1) \cup SE(t_2)$ = {std}∪{antif}

- $SU(t_1) \cap (t_2)$ = $SU(\{cc_v\})$ = {$cc_v$}

so that $t' = t_1 \cup_T t_2$ = $[SE(t_1) \cup SE(t_2) \cup SU(t_1 \cap t_2)]$ = {antif,$cc_v$}

*second nesting (t''):*

$$t'' = -_T(t') = -_T\{antif, cc_v\} = \{fct, cv_x\}$$

*third nesting:*

$$t = t'' \cap_T t_3 = SR(t'') \cup SR(t_3) \cup SI(t'' \cap t_3)$$

$$t = t'' \cap_T t_3 = [SR(fct, cv_x) \cup SR(fct) \cup SI(\{fct, cv_x\} \cap \{fct\})] =$$

$$[\{fct, cv_x\} \cup \{fct\} \cup \{fct, cv_x\}] = [\{fct, cv_x\}]$$

As for the first and second examples, Step 617 includes normalising types within the nestings; in this example there are three nestings, so that normalisation occurs three times. Referring to Figure 5, for the third (outer) nesting, normalising type [{fct}] gives properties {fct, $cv_x$, std}.

This example illustrates the recursive nature of the type algebra: type operations can be nested within other type operations, and the inner-most operation is evaluated first in the manner shown in these examples. It will thus readily be appreciated by one skilled in the art that any constraint can be "built" from existing constraints using basic combining operations such as complementation, union and intersection.

Although the examples described thus far are concerned with union, complementation and intersection, other relational operations and their type counterpart could be described, and used, provided a definition thereof were provided (e.g. stored in the library LB). An example of another relational operator is taking the converse of a binary relation, described below. The motivation for relational operations is of course constraint expressions: if a new constraint expression utilises a particular constraint operator (e.g. some sort of combinatory operation), then a corresponding type operator is required if the type of this new constraint is to be inferred using the invention.

Each of the afore-mentioned examples describes a combination of unary constraints, which relate to the same variable (x). However, an embodiment of the invention can also be used to combine constraints relating to more than one variable - e.g. for a Vehicle Routing Problem, where the goal is to assign a sequence of visits to each vehicle in a fleet, an embodiment can be used to express conditions such as: "If a task starts (s) before 12:00am then its duration (d) is less than one hour". In this case, a first constraint (s<12:00) involves variable s and a second constraint (d<1.0) involves d.

These two unary constraints are combined by a logical "If THEN" expression to output a binary constraint involving both s and d. Mathematically, this expression IF c1 THEN c2 is formulated in terms of negation ($\neg$) and union (v) as $\neg$c1∨c2.

Thus in addition to the steps described above with reference to Figure 6, if a new constraint involves creating a binary constraint from two unary constraints, each of the two unary constraints first has to be "promoted" into a binary constraint. In this way both the new constraint and the two known constraints ($c_1$ and $c_2$) are all of the same binary scope. Accordingly the embodiment can further include a promoting program 419 (not shown) for promoting each of the unary constraints to corresponding binary constraints.

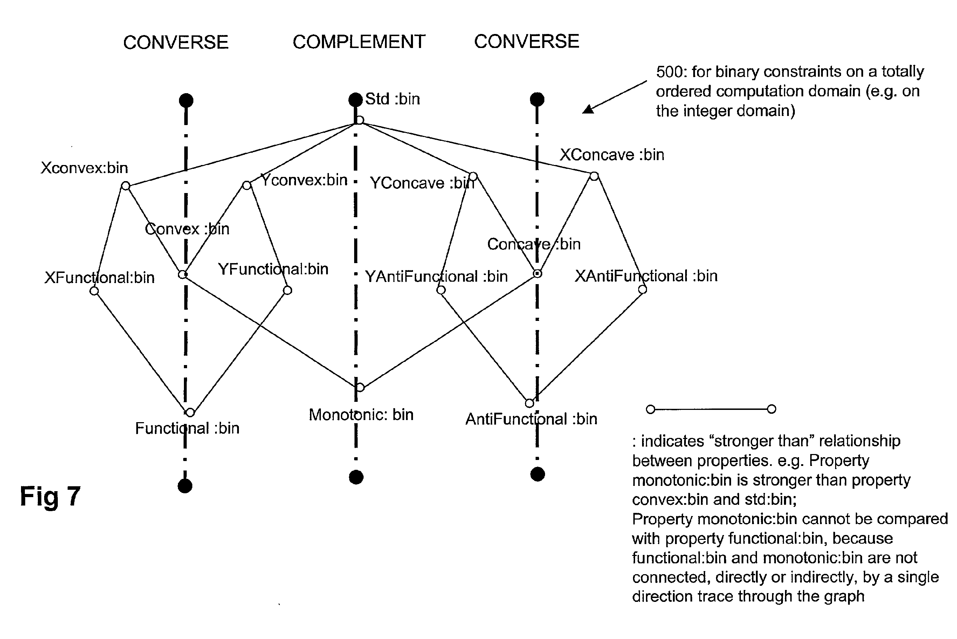

Promoting a constraint to a binary order affects the properties associated with the constraint because binary properties are different to unary properties. Figure 7 shows part of the unary graph 500 shown in Figure 5, namely convex, concave, functional, antifunctional, and monotonic for binary constraints. It can be seen that, in addition to convex and functional properties considered for unary constraints, binary constraints include x-convex, y-convex, x-functional, y-functional properties. This is to be expected, because binary constraints, by definition, have two dimensions, referred to here as x and y.

Thus, in addition to promoting the unary constraint to a binary constraint, the properties corresponding to the promoted binary constraint have to be identified. These can be identified from a store of mappings between <u>properties</u> of a unary constraint and <u>types</u> of a binary constraint. Preferably the type information is stored in the library LB as a look-up table, such as that shown in Table 1. This look-up table is generally manually created and updated whenever newly identified properties are added to the COL 03.

Table 1

| <u>Property</u> for unary constraint over (x) | Resulting <u>type</u> for binary constraint over (x,y) | Properties corresponding to normalized type |
|---|---|---|
| functional:un | [convex:bin] | standard, convex, x-convex, y-convex, y-functional |
| antifunctional:un | [concave:bin] | standard, concave, x-concave, y-concave, y-antifunctional |
| convex:un | [convex :bin] | standard, convex, x-convex, y-convex |
| concave:un | [concave:bin] | standard, concave, x-concave, y-concave |
| standard:un | [standard:bin] | standard |
| monotonic:un | [monotonic:bin] | standard, monotonic, convex, x-convex, y-convex, concave, x-concave, y-concave |

Recalling the current example, $c_1 = s < 12:00$ and $c_2 = d < 1.0$.

Promoting $c_1$ to a binary constraint involves promoting $c_1(s) \rightarrow c_1(s,d)$, and promoting $c_2$ to a binary constraint involves promoting $c_2(s) \rightarrow c_2(d,s)$. When creating a new constraint $c_3$ from a combination of $c_1$ and $c_2$, both constraints have to be expressed in an identical form (i.e. either as $c_1(s,d)$ and $c_2(s,d)$ or as $c_1(d,s)$ and $c_2(d,s)$). Accordingly, in the present example, $c_2$ is converted from $c_2(d,s)$ to $c_2(s,d)$.

To effect this conversion (i.e. to obtain $c_2(s,d)$ from $c_2(d,s)$), a converse operation can be applied to $c_2(d,s)$. Essentially, if the mapping $f(x) \rightarrow (x,y)$ is implemented, then the mapping $g(x) \rightarrow (y,x)$ can be obtained by applying the first mapping ($f:(x) \rightarrow (x,y)$) and then applying the converse operation on the result of the first mapping. That is, $g(c)$ =converse ($f(c)$). For example, if property A is row-convex, the converse thereof is property column-convex. The converse operation on types is defined "identically" to the complementation operation: the converse of a type is the set-union of the converses of the primitive properties of the type.

Referring back to the example, $c_1(s)$ is promoted to a binary constraint on $c_1(s,d)$. $c_1(s)$ is of type monotonic, which involves [monotonic:un] = {convex:un, concave:un, monotonic:un, standard:un}. The promoting program 419 refers to the mapping table to identify binary types corresponding to each of convex:un, concave:un, monotonic:un, standard:un, and retrieves the following types:

[convex:bin], [concave:bin], [std:bin] and [monotonic:bin]. Referring to Figure 7, it can be seen that
type [convex:bin] $\equiv$ {xconvex, yconvex, std}
type [concave:bin] $\equiv$ {xconcave, yconcave, std}
type [std:bin] $\equiv$ {std}
type [monotonic:bin] $\equiv$ {concave, xconcave, yconcave, convex, xconvex, yconvex, std}

so that [monotonic:bin] encompasses all of the properties involved in $c_1 = c_1(s,d)$, and is the type of promoted $c_1(s,d)$.

Turning now to $c_2(d)$, this is first promoted to $c_2(d,s)$, then, as $c_1$ and $c_2$ have to be expressed in the same format, $c_2(d,s)$ is transformed to $c_2(s,d)$, which involves applying a converse operation on type for $c_2(d,s)$. $c_2(s)$ is of the same type of $c_1(d)$, so that the type of $c_2(d,s)$ is also [monotonic:bin]. Applying the converse operation on type [monotonic:bin] generates type [monotonic:bin], because the converse of monotonic is monotonic (referring to Figure 7 it can be seen that monotonic is stable by converse operation).

Thus constraint $c_1(s,d)$ has type [monotonic:bin] and constraint $c_2(s,d)$ has type [monotonic:bin].

Thus when receiving program 411 receives 601 constraint specification $\neg c_1 \vee c_2$ for constraints $c_1 = s < 12:00$ and $c_2 = d < 1.0$, the identifying program 413 first searches for promoted binary constraints $c_1(s,d)$ and $c_2(s,d)$, together with the type information relating thereto. If such information is available, the identifying program 413 retrieves it. If, however, no such binary constraints exist, the promoting program 419 creates them, as described above, and sends the created binary constraints and type information directly to the identifying program 413 (in addition to storing in the library LB), which performs some or all of steps 601 - 629 described above.

If the type mappings and converse operator were not defined in the inferencing engine 400, constraint $c_3$ could only be evaluated if user explicitly entered $c_1$ and $c_2$ as binary constraints.

The skilled person will appreciate that a mapping such as the one described above is not limited to generating a binary constraint from unary constraints, but can be applied to generating a k-ary constraint. However, it is a prerequisite that the inferencing engine 400 has a mapping, such as that shown in Table 1, defining transformations between unary and k-ary properties.

OTHER EMBODIMENTS AND ADDITIONAL MODIFICATIONS:

In general, a constraint system such as that described above does not tell you anything about potential solutions to a problem, it merely evaluates whether values are consistent with the constraint network (where the constraint network is all of the constraints in a problem).

In addition to identifying propagation algorithms for a new constraint, the property information derived in accordance with embodiments of the invention could be used to identify information about solution viability and/or to modify constraint propagation process.

Firstly, the property and type information could be used to identify whether or not there is a solution to the problem. For example, property information could be input to one or more expert rules that determine characteristics of a problem depending on network topology (constraints of problem) and property information. These expert rules could be stored in the Library LB, and applied in dependence on the property information, under control of another program (not shown).

For example, if the combining program 415 has determined that all of the constraints of the problem are binary and min-max closed, then this could be input to the other program, which triggers processing of the following expert rule:

"IF bound-consistency does not fail on this problem, THEN the resulting minimum values of the variables provide a solution to the problem". Thus the constraints could be propagated with a propagation algorithm that is optimised for bound-consistency, and, if the constraints are consistent, the inferencing engine 400 can deduce that there is a solution to the problem.

Secondly the property information could be used to select a relaxation method. The process of re-establishing consistency on a previously consistent network when one or several of its constraints are retracted is known as relaxation. With existing systems, when a constraint is retracted, the whole problem (i.e. all current constraints) has to be re-set (initial domains of variables are restored) and reevaluated (consistency has to be established from the beginning). This is expensive in terms of computing time, and it would be preferable to have a less expensive mechanism for relaxing a constraint network.

Property information identified as described above could be used to develop a specialised (cheaper) relaxation method. For example, when all constraints in the problem are of the same, or equivalent, type (as defined above), such as $x = y$, $y = z$, $z = x$, upon program definition, another program (not shown) could log the fact that the constraints have the same property, namely equality. If, once the constraint network has been propagated, constraint $z = x$ were retracted from the problem, the other program could be consulted to determine the relationship between the constraints. If the constraints were equality constraints, this means that removal of one of the constraints has no effect on the network. In this example, the properties are indeed homogenous, so there is no need to re-evaluate the constraint network.

In the embodiments described above, the constraints used to build the new constraint $c_3$ are assumed to be available and accessible from the library LB. In some situations, a user may want to define a new constraint and a corresponding new property corresponding thereto. The user would therefore have to specify the strength of this property with respect to the other properties (e.g. on a graph of properties, such as that shown in Figure 5), the complement property, and stability information relating to the property and the complement thereof (to enable the type algebra to be computed by the combining program), and make this information available, e.g. by storing it in the library LB.

APPENDIX A:

Definition of terms

❑ Constraint property: a mathematical description of characteristics of a constraint (so that, e.g. an inequality constraint type, such as $x < y$, has certain characteristics that can be classified into a set of properties). Examples of constraint properties include convexity, concavity, functionality, min-closedness, and max-closedness properties. In the description, the term "primitive property" is interchangeably used with "property" per-se.

❑ A constraint property over $D^k$ is any subset of k-ary relations over D, where D is the computation domain and k is the arity, or the number of variables in a constraint.

❑ "strongest property": is the intersection of all properties that satisfy a constraint.

❑ "soundness": an ability to deduce knowledge correctly.

❑ "completeness": a measure of the efficiency of a system, and indicates the ability of the system to identify a strongest property.

❑ "constraint network": all of the constraints in a problem.

*Strong property:*

Formally, a property $p \in S_p$ (meaning p belonging to a set of properties $S_p$) is stronger than a property q if $p \subseteq q$ (meaning p is a subset of q), which means that the set of constraints satisfying p is included in q.

The strongest property p for a constraint c wrt $S_p$ is such that c verifies p; if $q \in S_p$ verifies c then $p \subseteq q$

Thus IF $\{p_1, \ldots p_m\}$ is the set of all properties in $S_p$ that satisfy c,

THEN the combination $p_1 \cap p_2 \cap \ldots p_n$

• Satisfies p

• Belongs to $S_p$ if $S_p$ is closed by set-intersection

• Is stronger than any valid property for c in $S_p$ if $S_p$ is closed by set intersection

Examples of unary constraint "stronger-than" relationships can be derived from Figure 5: Functional is stronger than convex; every property is stronger than the

standard property; Functional and monotonic are not comparable. Figure 7 shows a selection of "stronger-than" relationships for a selection of binary constraints.

*Normalisation:*

Normalisation is a completion process whereby all the primitive properties corresponding to $t_3$ are identified. Normalisation includes reviewing the ordering between the primitive properties in $S_p$ (e.g. such as those shown in Figure 5), and identifying all properties that include, and are weaker-than, the properties of the type $t_3$.

All types should preferably be normalised before being passed as arguments to type operations, either explicitly by the user (e.g. types can be normalised when they are created and assigned to primitive constraints), or by normalising the types, as described above at step 617 of example 1.

*Type Operators:*

$\cap_T$: Intersection type operator

$\cup_T$: Union type operator

$-_T$: Complement type operator

*Type operations:*

Referring to Equations A1 – A3, type operations are distinct from set operations: intersection of the type s with t is denoted as $\cap_T$, and denotes an operation that is different to a set operation of intersection performed on types s and t.

$$-_T = [\cup_{p \in t} \{\{c \in \wp(D^k) : -c \in p\}\}] \text{ for all } t \in S_T \qquad \text{A1}$$

$$s \cap_t t = [SR(s) \cup SR(t) \cup SI(s \cap t)] \text{ for all } s, t \in S_T \qquad \text{A2}$$

$$s \cup_t t = [SE(s) \cup SE(t) \cup SU(s \cap t)] \text{ for all } s, t \in S_T \qquad \text{A3}$$

where SR(s) indicates that the property/properties involved in type s is/are stable by restriction, SI(s) indicates that the property/properties involved in type s is/are stable by intersection, SE(s) indicates that the property/properties involved in type s is/are stable by extension, and SU(s) indicates that the property/properties involved in type s is/are stable by union.

Definition of SR()

if $c_3 = c_1 \cap c_2$, and

$c_1$ is associated with property $p_1$, $c_2$ is associated with property $p_2$,

if $p_1$ is stable by restriction ($SR(p_1)$) this implies that $c_3$ verifies property $p_1$.

Definition of SI()

As for SR(s) but only if $p_1 = p_2$

Definition of SE()

if $c_3 = c_1 \cup c_2$, and

$c_1$ associated with property $p_1$, $c_2$ associated with property $p_2$,

if $p_1$ is stable by extension ($SE(p_1)$) this implies that $c_3$ verifies property $p_1$.

Definition of SU()

As for SE(s) but only if $p_1 = p_2$

Unary constraints:

An example of a set of properties P(total ordering,1) for unary constraints over finite total orderings includes the following properties (refer to Figure 5):

- *standard* (denoted std, or $\perp$): any constraint is standard 501;
- *convex* (denoted cv$_x$, or []): a constraint is convex if it forms an interval (possibly empty) 503;
- *concave* (denoted cc$_v$, or ][): a constraint is concave if its complement is concave 505;
- *monotonic* (denoted mon, $\leq$): a constraint is monotonic if, and only if, it is convex and concave 507;
- *functional* (denoted fct, or $=$): a constraint is functional if it contains at most one value 509;
- *antifunctional* (denoted antif, or $\neq$): a constraint is antifunctional if its complement is functional 511;
- *empty* (denoted $\varnothing$): a constraint is empty if it is the empty set 513;
- *universal* (denoted x): a constraint is universal if its complement is empty 515;

Binary constraints:

17

An example of a set of properties P (total ordering,2) for binary constraints over finite total orderings is based on three fundamental properties, namely: convexity, min-max-closedness and reflexivity. The other properties are systematically derived by complementation, transposition (e.g. x-convexity gives y-convexity, min-max-closed gives co-min-max-closed) or are specialised by conjunction. The set of properties includes the following properties:

- *standard*: any constraint is standard;

- *x-convex*: a constraint is x-convex if all its unary restrictions on x are convex;

- *y-convex*: a constraint is y-convex if all of its unary restrictions on y are convex

- *convex*: a constraint is convex if, and only if, it is x-convex and y-convex;

- *x-concave*: a constraint is x-concave if all its unary restrictions on x are concave;

- *y-concave*: a constraint is y-concave if all of its unary restrictions on y are concave;

- *concave*: a constraint is concave if, and only if, it is x-concave and y-concave;

- *x-functional*: a constraint is x-functional if all its unary restrictions on x are functional;

- *y-functional*: a constraint is y-functional if all its unary restrictions on y are functional;

- *functional*: a constraint is functional if, and only if, it is x-functional and y-functional;

- *monotonic*: a constraint is monotonic if, and only if, it is convex and concave;

- *empty*: a constraint is empty if it is the empty set;

- *universal*: a constraint is universal if its complement is empty.

**Claims**

1. Apparatus for identifying a property associated with a constraint, a property being a characteristic of a constraint and being for use in identifying an algorithm for propagation of the constraint in a resource allocation problem, the apparatus comprising:

   (i) storage (LB) for storing
   an ordering (500) between properties of constraints;
   constraints and types associated with the constraints, wherein a type is a conjunction of properties;
   a plurality of processable specifications (A1, A2, A3) for combining types in accordance with any of a plurality of combinatorial type operators;
   (ii) receiving means (411) for receiving a constraint, the received constraint being expressed as a combination of at least two stored constraints;
   (iii) retrieving means (413) for retrieving the at least two stored constraints involved in the received constraint;

(iv) means (413) for

    analysing the combination of the at least two constraints in order to identify a combinatorial type operator corresponding thereto, and

    retrieving a specification associated with the identified combinatorial type operator;

(v) processing means (415) for processing the retrieved specification, thereby identifying a type associated with the new constraint;

(vi) accessing means (415) for accessing the ordering between properties stored in the store so as to identify one or more properties associated with the or each identified type.

2.  Apparatus according to claim 1, wherein the storage (LB) further includes a mapping between properties and algorithms and the apparatus further includes means (417) for accessing the mappings stored in the store so as to identify an algorithm corresponding to the or each retrieved property.

3.  Apparatus according to claim 1 or claim 2, wherein, when the received constraint involves more than one kind of combination of the at least two constraints, the means (413) is arranged to analyse the relationship between the combinations and the processing means (415) is arranged to recursively process corresponding retrieved specifications in accordance with the analysed relationship.

4.  Apparatus according to any one of the preceding claims, wherein the means (413) is further arranged to identify variables involved in each of the at least two constraints, and, if one of the constraints involves a variable that is not involved in one or more of the other constraints, the means (413) is arranged to modify each of the said constraints so that each constraint involves the same variables.

5.  A method of identifying a property associated with a constraint, a property being a characteristic of a constraint and being for use in identifying an algorithm for a resource allocation problem, the method including the steps of:

    receiving (601) a constraint, the received constraint being expressed as a combination of at least two constraints;

    analysing (605) the combination of the at least two constraints in order to identify a combinatorial type operator corresponding thereto;

    retrieving (609) types associated with the at least two constraints, wherein a type is a conjunction of properties;

    retrieving (611) a specification for combining types associated with the identified combinatorial type operator;

    processing (615) the retrieved specification, thereby identifying one or more types associated with the new constraint;

    accessing (617) an ordering between properties so as to identify one or more properties associated with the or each identified type.

6.  A method according to claim 5, further including accessing (623) a mapping between properties and algorithms so as to identify (627) an algorithm corresponding to the or each retrieved property.

7.  A method according to claim 6, including applying the identified algorithm when propagating the received constraint during evaluation of a resource allocation problem that includes the received constraint.

8.  A method according to claim 6 or claim 7, further including the steps of identifying variables involved in each of the at least two constraints, and, if one of the constraints involves a variable that is not involved in one or more of the other constraints, modifying each of the said constraints so that each constraint involves the same variables.

9.  A method according to claim 8, wherein the modifying step includes reviewing the properties associated with each of the at least two unmodified constraints in order to determine corresponding properties for the modified constraints.

unary constraint, 101

binary constraint, 100

$s_j$

$s_i$

$e_i$

$d_i$

ternary constraint, 102

Constraints:

$10:00 < s_i < 12:00$ (unary)
$s_j = e_i + c$ (binary)
$e_i = s_i + d_i$ (ternary)

**Figure 1**

EP 1 316 916 A1

STEP | EFFECT | STACK STATUS

S 2.1

Pre-enforcement of
constraints C1, C2

S 2.2

If any variables have changed
during Step S 2.1, place those
variables on a stack

x and t have changed..so
place them on stack: 203, 205

201[1]

| x | — 203 |
| t | — 205 |

S 2.3

Take 1st variable in stack 203 and
apply whichever constraint(s)
includes that variable

Apply C2: x 203 removed from
stack but added at bottom 207

201[2]

| t | — 205 |
| x | — 207 |

S 2.4

Take next variable in stack 205 and
apply whichever constraint(s)
includes that variable

Apply C1, C2: no change to
variables; remove 205 from stack

201[3]

| x | — 207 |

S 2.5

Take next variable in stack 207 and
apply whichever constraint(s)
includes that variable

Apply C2: no change to variables,
remove 207

Empty
stack

**Figure 2a**

**Figure 2b**

EP 1 316 916 A1

**Figure 3a**

| Y \ X | 1 | 2 | 3 | 4 | 5 | 6 |
|---|---|---|---|---|---|---|
| 1 | 1 | 1 | 1 | 0 | 0 | 0 |
| 2 | 0 | 0 | 0 | 0 | 0 | 0 |
| 3 | 0 | 0 | 1 | 1 | 0 | 0 |
| 4 | 0 | 0 | 0 | 0 | 0 | 0 |
| 5 | 0 | 1 | 0 | 0 | 0 | 0 |
| 6 | 0 | 0 | 0 | 1 | 1 | 0 |

Row-convex Property

**Figure 3b**

| Y \ X | 1 | 2 | 3 | 4 | 5 | 6 |
|---|---|---|---|---|---|---|
| 1 | 0 | 0 | 1 | 0 | 0 | 0 |
| 2 | 0 | 0 | 0 | 0 | 0 | 0 |
| 3 | 0 | 0 | 0 | 1 | 0 | 0 |
| 4 | 0 | 0 | 1 | 0 | 0 | 0 |
| 5 | 0 | 0 | 0 | 0 | 0 | 1 |
| 6 | 0 | 0 | 0 | 0 | 0 | 0 |

X-functional Property

**Figure 3c**

| X \ Y | 1 | 2 | 3 | 4 | 5 | 6 |
|---|---|---|---|---|---|---|
| 6 | 0 | 0 | 0 | 0 | 1 | 1 |
| 5 | 0 | 0 | 1 | 0 | 1 | 1 |
| 4 | 0 | 0 | 0 | 0 | 1 | 0 |
| 3 | 1 | 1 | 0 | 0 | 1 | 0 |
| 2 | 0 | 1 | 0 | 0 | 1 | 0 |
| 1 | 0 | 0 | 0 | 0 | 0 | 0 |

Max-closed Property

**Figure 3d**

| X \ Y | 1 | 2 | 3 | 4 | 5 | 6 |
|---|---|---|---|---|---|---|
| 6 | 0 | 0 | 0 | 0 | 0 | 1 |
| 5 | 0 | 0 | 1 | 0 | 0 | 1 |
| 4 | 0 | 0 | 1 | 0 | 1 | 1 |
| 3 | 1 | 0 | 1 | 0 | 1 | 1 |
| 2 | 1 | 1 | 1 | 0 | 1 | 0 |
| 1 | 0 | 0 | 0 | 0 | 0 | 0 |

Min-closed Property

**Figure 4a**

New job,
change in resources

DB 01

COL 03

USER interaction CLIENT 09

SCHEDULER 05

REPAIR CLIENT 07

EP 1 316 916 A1

05,
07,
09
etc.

LB

405 — I/O

401 — CPU

403 — Memory unit

407 —

409

OS programs

T1

COL
03

411

LB

413

415    417

Inferencing
engine 400

Fig 4b

COMPLEMENT

: indicates "stronger than" relationship
between properties. e.g. Property monotonic
is stronger than property convex and std;
Property monotonic cannot be compared with
property functional, because functional and
monotonic are not connected, directly or
indirectly, by a single direction trace through
the graph

500: for unary constraints on a totally
ordered computation domain (e.g. on
the integer domain)

Std, 501

Convex,
ccx 503

Concave,
ccv 505

**Fig 5**

Functional,
fct 509

Monotonic,
mon 507

Anti-functional,
antif 511

Property « Functional »
inherits all properties
above: thus normalising
type {fct} gives properties
{fct,ccx,std}

Empty
□ 513

Universal
x 515

EP 1 316 916 A1

**Fig 6**

601 — Receive constraint specification

603 — Pass for analysis of constraint specification

605 — Detect constraint algebra and "nesting"

607 — Transpose constraint algebra into type algebra

609,611 — Identify and retrieve type information

613 — Pass type information for operations thereon

615 — Apply type operation in accordance with nesting detected at step 605

617 — Access ordering between properties to identify properties from type

619 — Pass identified properties to create propagation algorithm

621,623,625 — Compare identified properties with properties stored in Library LB and tag those that are identical to identified properties

627 — Retrieve propagation algorithm(s) linked to tagged properties

629 — Assign retrieved propagation algorithm to new constraint

EP 1 316 916 A1

CONVERSE  COMPLEMENT  CONVERSE

Std :bin

500: for binary constraints on a totally ordered computation domain (e.g. on the integer domain)

XConcave :bin

Xconvex:bin

Yconvex:bin  YConcave :bin

Convex :bin

Concave :bin

XFunctional:bin  YFunctional:bin  YAntiFunctional :bin  XAntiFunctional :bin

Functional :bin  Monotonic: bin  AntiFunctional :bin

**Fig 7**

: indicates "stronger than" relationship between properties. e.g. Property monotonic:bin is stronger than property convex:bin and std:bin;
Property monotonic:bin cannot be compared with property functional:bin, because functional:bin and monotonic:bin are not connected, directly or indirectly, by a single direction trace through the graph

EP 1 316 916 A1

**European Patent Office**

## DECLARATION

which under Rule 45 of the European Patent Convention shall be considered, for the purposes of subsequent proceedings, as the European search report

**Application Number**

EP 01 31 0038

| | CLASSIFICATION OF THE APPLICATION (Int.Cl.7) |
|---|---|
| The Search Division considers that the present application, does not comply with the provisions of the EPC to such an extent that it is not possible to carry out a meaningful search into the state of the art on the basis of all claims<br><br>Reason:<br><br><br>The claims relate to subject matter excluded from patentability under Art. 52(2) and (3) EPC, ie. a mathematical method. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also<br><br>Guidelines Part B Chapter VIII, 1-6.<br><br>The applicant's attention is drawn to the fact that a search may be carried out during examination following a declaration of no search under Rule 45 EPC, should the problems which led to the declaration being issued be overcome (see EPC Guideline C-VI, 8.5).<br>---<br>----- | G06N5/00 |

| Place of search | Date | Examiner |
|---|---|---|
| THE HAGUE | 12 July 2002 | Kingma, Y |

EPO FORM 1504 (P04C37)